# EUROPEAN PATENT APPLICATION

(11) **EP 1 632 556 A1**
(43) Date of publication of application: **08.03.2006**
(21) Application number: 04745844.3
(22) Date of filing: 08.06.2004
(51) Int. Cl.: C11B 5/00, C11C 3/00, A23D 9/00, A23L 1/30

(54) **NOVEL METHOD OF DEODORIZATION FOR FAT ODOR AND COMPSOITION OBTAINED BY THE SAME**

(30) Priority: 09.06.2003 JP 2003163598
(71) Applicant: SUNTORY LIMITED, Osaka-shi, Osaka 530-8203 (JP)
(72) Inventor: KONISHI, Kyoko, Ibaraki-shi, Osaka 5670828 (JP)
(74) Representative: Stoner, Gerard Patrick
(86) International application number: PCT/JP2004/008284
(87) International publication number: WO 2004/108870

(57) **Abstract**

The present invention provides a novel deodorizing composition and a novel deodorizing method. A composition is provided in which oily odors have been deodorized by containing a xanthophyll or other carotenoid in an oil such as a highly unsaturated fatty acid or compound containing a highly unsaturated fatty acid as a constituent fatty acid, and a deodorizing method, for oily odors, comprising containing a carotenoid in an oil is provided.

## Description

### BACKGROUND OF THE INVENTION

### Field of the Invention

The present invention relates to a novel deodorizing method, for oily odors, comprising the combining of a carotenoid and an oil comprised of a highly unsaturated fatty acid or compound having for a constituent fatty acid a highly unsaturated fatty acid and, more particularly, at least one compound selected from the group consisting of an alcohol ester of a highly unsaturated fatty acid, a triglyceride having for a constituent fatty acid a highly unsaturated fatty acid, and a phospholipid having for a constituent fatty acid a highly unsaturated fatty acid, and to a composition on which a novel deodorization method has been practiced.

### Background Art

The pathway by which highly unsaturated fatty acids are biosynthesized in humans consists of two representative systems, namely the omega-3 system and the omega-6 system (omega indicates the number of carbon atoms to the carbon atom where the first double bond is located counting from the terminal methyl group of a fatty acid). Known examples of omega-6 highly unsaturated fatty acids include linoleic acid, γ-linolenic acid, dihomo-γ-linolenic acid and arachidonic acid, while known examples of omega-3 highly unsaturated fatty acids include α-linolenic acid, eicosapentaenoic acid and docosahexaenoic acid.

These highly unsaturated fatty acids are involved in regulation of membrane fluidity, as major constituents of cell membranes, with arachidonic acid, for example, accounting for roughly 10% of the fatty acids that compose important organs such as the blood and liver (for example, the composite ratios of fatty acids in phospholipids of human blood consist of 11% arachidonic acid, 1% eicosapentaenoic acid and 3% docosahexaenoic acid) and, while they exhibit various functions related to the body's metabolism, they also fulfill the important role of being direct precursors of prostaglandins.

More recently, in particular, attention has been focused on the role of arachidonic acid as a nutrient of newborns and infants and as a constituent fatty acid of intrinsic cannabinoids (2-arachidonoyl monoglycerol, anandamide) demonstrating neuroactivating action. Arachidonic acid and compounds having arachidonic acid as a constituent fatty acid were also recently clearly demonstrated to prevent decreases in learning ability accompanying aging by the administration of arachidonic acid, and/or compounds having arachidonic acid as a constituent fatty acid, to aged rats subjected to a Morris water maze test as reported in Japanese Unexamined Patent Publication No. 2003-48831 entitled, "Composition having Preventive or Ameliorative Action on Symptoms or Diseases Caused by Decreased Brain Function".

The omega-3 highly unsaturated fatty acids of eicosapentaenoic acid (abbreviated as EPA) and docosahexaenoic acid (abbreviated as DHA) are known to have numerous physiological functions, including preventive effects on lifestyle diseases such as arteriosclerosis and thrombosis, carcinostatic action and learning ability enhancement action, and attempts are being made to use them in pharmaceuticals, special health foods and so forth.

Omega-6 highly unsaturated fatty acids are biosynthesized in the body by using linoleic acid as a precursor, while omega-3 highly unsaturated fatty acids are similarly biosynthesized using α-linolenic acid as a precursor. However, since humans are unable to biosynthesize linoleic acid and α-linolenic acid, in the case of, for example, omega-6 highly unsaturated fatty acids using linoleic acid as a precursor, they are converted to γ-linolenic acid, dihomo-γ-linolenic acid and arachidonic acid after ingesting plant foods and repeatedly desaturating and elongating the carbon chain. Thus, arachidonic acid, EPA and DHA are normally adequately biosynthesized if foods rich in linoleic acid and α-linolenic acid are ingested. However, as the functions of enzymes involved in biosynthesis are depressed in patients with lifestyle diseases, persons susceptible to these diseases, infants and the elderly, these highly unsaturated fatty acids tend to be deficient, thereby making it desirable that they be ingested directly as oil or fat.

Highly unsaturated fatty acids are fatty acids that have 18 or more carbon atoms and 2 or more double bonds, and are easily auto-oxidized resulting in the generation of an oxidation odor. Typical known examples of methods based on a deodorizing principle include: (1) adsorption (activated charcoal, zeolite), (2) dissolution (deodorizing agent such as silica gel), (3) degradation (biodegradation, oxidative degradation (ozone O₃), hydrolysis (photocatalyst OH⁻), ionic degradation (oxygen cluster ions) or combustion (oxidative catalysis, direct combustion)), and (4) coagulation (removal by surrounding with a high molecular weight compound).

Physical deodorization in the manner of activated charcoal is effective a deodorizing method for oils, and deodorizing operations are incorporated in the purification process for using oil or fat in foods. However, in the case of oils containing a high content of highly unsaturated fatty acid, the oily odor cannot be completely removed as is clear from the example of fish oil, thus making it necessary to continuously endure the oily odor if these are to be routinely ingested to maintain health. In addition, in the case of implementing high-purity deodorization with the objective of permitting routine ingestion, costs increase to prevent this deodorization from being used practically.

Although the oily odor at the time of ingestion can be prevented by encapsulating oils, due to the aftertaste produced after ingestion, it is necessary to actually deodorize the oil itself. Although other known methods of deodorization include neutralization (an offset method using a plurality of different odors) and masking (covering up the original odor with a different odor), there are problems with using a certain preferential odor (or fragrance in the case of masking) for use in a food product, and a fragrance that is soluble in the oil is required, there is a need to develop a completely new deodorizing method.

Thus, there is a need to develop a novel deodorizing method, along with a composition in which that novel deodorizing method is implemented, that is suitable for application to foods routinely used as oils comprising a highly unsaturated fatty acid or compound having for a constituent fatty acid a highly unsaturated fatty acid, and more particularly, at least one compound selected from an alcohol ester of a highly unsaturated fatty acid, a triglyceride having as a constituent fatty acid a highly unsaturated fatty acid and a phospholipid having as a constituent fatty acid a highly unsaturated fatty acid.
Patent Document 1: Japanese Unexamined Patent
Publication No. 2003-48831

### DISCLOSURE OF THE INVENTION

Thus, the present invention relates to a novel deodorizing method for oily odors comprising the combining of a carotenoid and an oil comprised of a highly unsaturated fatty acid or compound having for a constituent fatty acid a highly unsaturated fatty acid, and more particularly, at least one compound selected from the group consisting of an alcohol ester of a highly unsaturated fatty acid, a triglyceride having for a constituent fatty acid a highly unsaturated fatty acid, and a phospholipid having for a constituent fatty acid a highly unsaturated fatty acid, and to a composition on which a novel deodorization method has been practiced.

### SUMMARY OF THE INVENTION

As a result of conducting extensive studies on lipid-soluble materials observed to have deodorizing effects on highly unsaturated fatty acids or compounds having for a constituent fatty acid a highly unsaturated fatty acid, and more particularly, at least one compound selected from the group consisting of an alcohol ester of a highly unsaturated fatty acid, a triglyceride having for a constituent fatty acid a highly unsaturated fatty acid and a phospholipid having for a constituent fatty acid a highly unsaturated fatty acid, the inventors of the present invention surprisingly determined that carotenoids have deodorizing effects.

Thus, an object of the present invention is to provide a novel deodorizing method for oily odors comprising combining a carotenoid with a highly unsaturated fatty acid or compound having for a constituent fatty acid a highly unsaturated fatty acid, and more particularly, at least one compound selected from the group consisting of an alcohol ester of a highly unsaturated fatty acid, a triglyceride having for a constituent fatty acid a highly unsaturated fatty acid and a phospholipid having for a constituent fatty acid a highly unsaturated fatty acid, and a composition on which novel deodorization has been implemented.

Thus, the present invention provides a composition on which a novel deodorizing method for oily odors has been implemented that contains a carotenoid in an oil. Moreover, the present invention provides a novel deodorizing method for oily odors comprising adding a carotenoid to an oil.

In the aforementioned composition or method, the oil is preferably a highly unsaturated fatty acid or compound containing as a constituent fatty acid a highly unsaturated fatty acid, examples of which include an alcohol ester of a highly unsaturated fatty acid, a triglyceride having as a constituent fatty acid a highly unsaturated fatty acid, and a phospholipid having as a constituent fatty acid a highly unsaturated fatty acid. The aforementioned highly unsaturated fatty acid is, for example, an omega-6 highly unsaturated fatty acid and/or an omega-3 highly unsaturated fatty acid and/or an omega-9 highly unsaturated fatty acid.

Examples of the aforementioned omega-6 highly unsaturated fatty acid include 9,12-octadecadienoic acid (linoleic acid) 18:2ω6, 6,9,12-octadecatrienoic acid (γ-linolenic acid) 18:3ω6, 8,11,14-eicosatrienoic acid (dihomo-γ-linolenic acid) 20:3ω6, 5,8,11,14-eicosatetraenoic acid (arachidonic acid) 20:4ω6, 7,10,13,16-docosatetraenoic acid 22:4ω6 and 4,7,10,13,16-docosapentaenoic acid 22:5ω6, examples of the aforementioned omega-3 highly unsaturated fatty acid include 9,12,15-octadecatrienoic acid (α-linolenic acid) 18:3ω3, 6,9,12,15-octadecatetraenoic acid (stearidonic acid) 18:4ω3, 11,14,17-eicosatrienoic acid (dihomo-α-linolenic acid) 20:3ω3, 8,11,14,17-eicosatetraenoic acid 20:4ω3, 5,8,11,14,17-eicosapentaenoic acid 20:5ω3, 7,10,13,16,19-docosapentaenoic acid 22:5ω3 and 4,7,10,13,16,19-docosahexaenoic acid 22:6ω3, and examples of the aforementioned omega-9 highly unsaturated fatty acid include 6,9-octadecadienoic acid 18:2ω9, 8,11-eicosadienoic acid 20:2ω9 and 5,8,11-eicosatrienoic acid (Mead acid) 20:3ω9.

In the aforementioned composition or method, a triglyceride having for a constituent fatty acid an omega-6 highly unsaturated fatty acid is extracted from microbial cells obtained by culturing a microbe belonging to the genus Mortierella, for example. An example of the aforementioned triglyceride having for a constituent an omega-3 highly unsaturated fatty acid is fish oil. Examples of the aforementioned carotenoids include carotenes or xanthophylls such as β-carotene, α-carotene, β-cryptoxanthin, α-cryptoxanthin, γ-carotene, lycopene, lutein, fucoxanthin, capsanthin, zeaxanthin, phytofluene, phytoene, canthaxanthin and astaxanthin.

In the aforementioned composition or method, the ratio of carotenoid to highly unsaturated fatty acid that composes the oil is preferably 0.00001 to 0.1, for example 0.0001 to 0.01, and more preferably 0.001 to 0.01. The aforementioned composition is, for example, a functional food, nutritional supplement food, special health food or geriatric food.

### DESCRIPTION OF THE PREFERRED EMBODIMENTS

The present invention relates to a novel deodorizing method for oily odors comprising the combining of a carotenoid and an oil comprised of a highly unsaturated fatty acid or compound having for a constituent fatty acid a highly unsaturated fatty acid, and more particularly, at least one compound selected from the group consisting of an alcohol ester of a highly unsaturated fatty acid, a triglyceride having for a constituent fatty acid a highly unsaturated fatty acid, and a phospholipid having for a constituent fatty acid a highly unsaturated fatty acid, and to a composition on which a novel deodorization method has been practiced.

A highly unsaturated fatty acid or compound having for a constituent fatty acid a highly unsaturated fatty acid can be used for the target oil of the present invention. Highly unsaturated fatty acids indicate a fatty acid having 18 or more carbon atoms and 2 or more double bonds, examples of which include omega-6 highly unsaturated fatty acids such as 9,12-octadecadienoic acid (linoleic acid) 18:2ω6, 6,9,12-octadecatrienoic acid (γ-linolenic acid) 18:3ω6, 8,11,14-eicosatrienoic acid (dihomo-γ-linolenic acid) 20:3ω6, 5,8,11,14-eicosatetraenoic acid (arachidonic acid) 20:4ω6, 7,10,13,16-docosatetraenoic acid 22:4ω6 and 4,7,10,13,16-docosapentaenoic acid 22:5ω6.

Examples of omega-3 highly unsaturated fatty acids include 9,12,15-octadecatrienoic acid (α-linolenic acid) 18:3ω3, 6,9,12,15-octadecatetraenoic acid (stearidonic acid) 18:4ω3, 11,14,17-eicosatrienoic acid (dihomo-α-linolenic acid) 20:3ω3, 8,11,14,17-eicosatetraenoic acid 20:4ω3, 5,8,11,14,17-eicosapentaenoic acid 20:5ω3, 7,10,13,16,19-docosapentaenoic acid 22:5ω3 and 4,7,10,13,16,19-docosahexaenoic acid 22:6ω3.

Examples of omega-9 highly unsaturated fatty acids include 6,9-octadecadienoic acid 18:2ω9, 8,11-eicosadienoic acid 20:2ω9 and 5,8,11-eicosatrienoic acid (Mead acid) 20:3ω9.

For example, if the highly unsaturated fatty acid is arachidonic acid, all compounds having arachidonic acid as a constituent fatty acid can be used.

Examples of compounds having arachidonic acid as a constituent fatty acid include calcium salts, sodium salts and other salts of arachidonic acid. In addition, other examples of the aforementioned compounds include lower alcohol esters of arachidonic acid such as arachidonic methyl ester and arachidonic ethyl ester. In addition, triglycerides, phospholipids and glycolipids having arachidonic acid as a constituent fatty acid can also be used. Furthermore, the present invention is not limited to the aforementioned examples, and all compounds having arachidonic acid as a constituent fatty acid can be used.

In the case of considering application to foods, triglycerides are particularly desirable for the form of the oil. Although there are hardly any naturally-occurring supply sources of triglycerides that contain arachidonic acid, triglycerides containing arachidonic acid can already be obtained industrially, and can be supplied as edible oils. Thus, a triglyceride containing triglyceride in which all or a portion of the constituent fatty acids is arachidonic acid (triglyceride containing arachidonic acid) can be used for an oil of the present invention. There are no limitations on the ratio of arachidonic acid to total fatty acids that compose the triglyceride that contains arachidonic acid, and an oily odor attributable to arachidonic acid, which is one type of highly unsaturated fatty acid, can be effectively deodorized by addition of a carotenoid.

In order to use an oil (triglyceride) containing arachidonic acid industrially, a microbe having the ability to produce arachidonic acid can be cultured, and oil can then be extracted from the resulting microbial cells.

Examples of microbes having the ability to produce oil (triglyceride) having arachidonic acid as a constituent fatty acid include microbes belonging to the genuses Mortierella, Conidiobolus, Pythium, Phytophthora, Penicillium, Cladosporium, Mucor, Fusarium, Aspergillus, Rhodotorula, Entomophthora, Echinosporangium and Saprolegnia.

Examples of microbes belonging to the genus Mortierella, subgenus Mortierella include *Mortierella elongata, Mortierella exigua, Mortierella hygrophila* and *Mortierella alpina.*

Examples of specific strains include *Mortierella elongata* IFO8570, *Mortierella exigua* IFO8571, *Mortierella hygrophila* IFO5941 and *Mortierella alpina* IFO8568, ATCC16266, ATCC32221, ATCC42430, CBS219.35, CBS224.37, CBS250.53, CBS343.66, CBS527.72, CBS529.72, CBS608.70 and CBS754.68.

All of these microbial strains can be acquired without restriction from the Institute for Fermentation, Osaka (IFO), US American Type Culture Collection (ATCC) and Centrralbureau voor Schimmelcultures (CBS). In addition, *Mortierella elongata* SAM0219 (Fermentation Research Institute, Deposit No. 1239), which was isolated from the soil by the research group of the present invention, can also be used.

In order to culture a microbe having the ability to produce an oil (triglyceride) having arachidonic acid as a constituent fatty acid, the spores or mycelia of that microbial strain a pre-culture liquid obtained by preliminary culturing thereof are cultured by inoculating into a liquid or solid medium. In the case of a liquid medium, although typically used carbon sources such as glucose, fructose, xylose, saccharose, maltose, soluble starch, molasses, glycerol or mannitol can be used for the carbon source, the carbon source is not limited to these.

Examples of nitrogen sources that can be used include organic nitrogen sources such as yeast extract, malt extract, beef extract, casamino acids, corn stiplica, soybean protein, defatted soybeans, cottonseed residue and other naturally-occurring nitrogen sources, as well as inorganic nitrogen sources such as sodium nitrate, ammonium nitrate and ammonium sulfate. Trace nutrients including inorganic salts such as phosphates, magnesium sulfate, iron sulfate and copper sulfate as well as vitamins can also be used as necessary. There are no particular restrictions on the concentrations of these medium components provided they do not inhibit microbial growth. Typically, in terms of practical use, the concentration of the carbon source should be 0.1 to 40% by weight, and preferably 1 to 25% by weight. The starting amount of nitrogen source added is typically 0.1 to 10% by weight and preferably 0.1 to 6% by weight, and the nitrogen source may be added during the course of culturing.

Moreover, an oil (triglyceride) having an arachidonic acid content of 45% or more can be produced and used as an oil by controlling the concentration of carbon source in the medium. A specific example of culturing consists of a microbial growth period during the 2nd to 4th day of culturing followed by an oil accumulation period starting after the 2nd to 4th day of culturing. The starting concentration of the carbon source should typically be 1 to 8% by weight and preferably 1 to 4% by weight, the carbon source should be added gradually only between the microbial growth period and the first part of the oil accumulation period, and the total amount of the gradually-added carbon source should be 2 to 20% and preferably 5 to 15%. Furthermore, the amount of the carbon source gradually added between the microbial growth period and first part of the oil accumulation period should be such that the carbon source is added corresponding to the starting concentration of the nitrogen source and then added so that the carbon source concentration in the medium reaches zero starting on day 7 of culturing, preferably starting on day 6 of culturing, and more preferably starting on day 4 of culturing.

Although varying according to the microbe used, the culturing temperature of microbes having the ability to produce an oil (triglyceride) having arachidonic acid as a constituent fatty acid is 5 to 40°C and preferably 20 to 30°C, and highly unsaturated fatty acid can be produced by continuing culturing at 5 to 20°C after growing the microbes by culturing at 20 to 30°C. The ratio of highly unsaturated fatty acid to the total fatty acids produced can also be increased by controlling the temperature in this manner. The pH of the medium is 4 to 10 and preferably 5 to 9, and culturing is carried out by fermentation with aeration and agitation, shaking culture or static culture. Culturing is normally carried out for 2 to 30 days, preferably 5 to 20 days and more preferably 5 to 15 days.

Moreover, an oil (triglyceride) having for a constituent fatty acid dihomo-γ-linolenic acid or an omega-9 highly unsaturated fatty acid can be used as a target oil of the present invention. A method has previously been developed for efficiently producing oil (triglyceride) having dihomo-γ-linolenic acid as a constituent fatty acid (Japanese Patent No. 3354581). Moreover, with respect to methods for efficiently producing an oil (triglyceride) having for a constituent fatty acid an omega-9 highly unsaturated fatty acid (6,9-octadecadienoic acid (18:2ω9), 8,11-eicosadienoic acid (20:2ω9) or 5,8,11-eicosatrienoic acid (20:3ω9)) as well, a method has been developed for producing an oil having for a constituent fatty acid a ω9 highly unsaturated fatty acid by using a mutant, in which Δ12 desaturase is decreased or deficient, obtained by subjecting a microbe belonging to the genus Mortierella subgenus Mortierella to mutagenic treatment (Japanese Patent No. 3354582, Japanese Unexamined Patent Publication No. 10-57085, Japanese Unexamined Patent Publication No. 5-91886).

Moreover, an oil having for a constituent fatty acid an omega-3 highly unsaturated fatty acid can also be provided as a target oil of the present invention. Specific examples of such oils include tuna oil, sardine oil, bonito oil, cod oil and linseed oil. Moreover, oils can also be used that have been obtained by culturing a microbe capable of efficiently producing oil having an omega-3 highly unsaturated fatty acid as a constituent fatty acid and extracting the resulting oil. Examples of microbes capable of producing oils having an omega-3 highly unsaturated fatty acid as a constituent fatty acid include those belonging to the genuses Crypthecodenium, Thraustochytrium, Schizochytrium, Ulkenia, Japonochytrium and Haliphthoros.

An oily odor can be decreased, alleviated or deodorized by combining a carotenoid with a highly unsaturated fatty acid or compound having for a constituent fatty acid a highly unsaturated fatty acid, and more particularly, at least one compound selected from the group consisting of an alcohol ester of a highly unsaturated fatty acid, a triglyceride having for a constituent fatty acid a highly unsaturated fatty acid, and a phospholipid having for a constituent fatty acid a highly unsaturated fatty acid. Specific examples of carotenoids include β-carotene, α-carotene, β-cryptoxanthin, α-cryptoxanthin, γ-carotene, lycopene, lutein, fucoxanthin, capsanthin, zeaxanthin, phytofluene, phytoene, canthaxanthin and astaxanthin.

The blending ratio of carotenoid required for deodorizing the oily odor is 0.00001 to 0.1, preferably 0.0001 to 0.01 and more preferably 0.001 to 0.01, as the ratio of carotenoid to the total amount of highly unsaturated fatty acid that composes the oil.

There are unlimited possibilities with respect to the applications of a highly unsaturated fatty acid or compound having a highly unsaturated fatty acid as a constituent fatty acid, and more particularly, an alcohol ester of a highly unsaturated fatty acid, triglyceride having as a constituent fatty acid a highly unsaturated fatty acid and phospholipid having as a constituent fatty acid a highly unsaturated fatty acid, and these can be used as raw materials or additives of foods, beverages, cosmetics and pharmaceuticals. There are no restrictions whatsoever on their purpose of use or amount used.

Examples of food compositions include general foods as well as functional foods, nutritional supplement foods, premature infant formulas, baby formulas, baby foods, foods for pregnant women and geriatric foods. Examples of foods that contain oil include naturally-occurring foods that inherently contain oils such as meat, fish and nuts, foods to which oils are added during cooking such as soup, foods that use oil as a heating medium such as doughnuts, oily foods such as butter, processed foods to which oil is added during processing such as cookies, and foods on which oil is sprayed or coated during finishing processing such as hard biscuits. Moreover, oils can also be added to agricultural product foods, fermented foods, livestock products, marine products or beverages which do not contain oil. Moreover, the aforementioned applications may also be in the form of functional foods or pharmaceuticals, examples of which include processed forms such as enteral nutritional preparations, powders, granules, troches, internal medicines, suspensions, emulsions and syrups.

### EXAMPLES

The following provides a more detailed explanation of the present invention through examples. However, the present invention is not limited to these examples.

### Example 1: Sensory Test of Deodorizing Effects on Oily Odors

A control oil was prepared by mixing 64% by weight of an oil (triglyceride) containing 25% arachidonic acid as a constituent fatty acid and 36% by weight of a purified fish oil (triglyceride) containing 46% DHA as a constituent fatty acid. Astaxanthin and other pigments were added to the control oil at the concentrations shown in Table 1 to prepare five types of sample oils. The deodorizing effects on the odor were assessed by 15 panelists in the form of a sensory test. The odors of the sample oils were evaluated to one of five grades based on the following standards while assigning a score of 0 to the odor of the control oil.

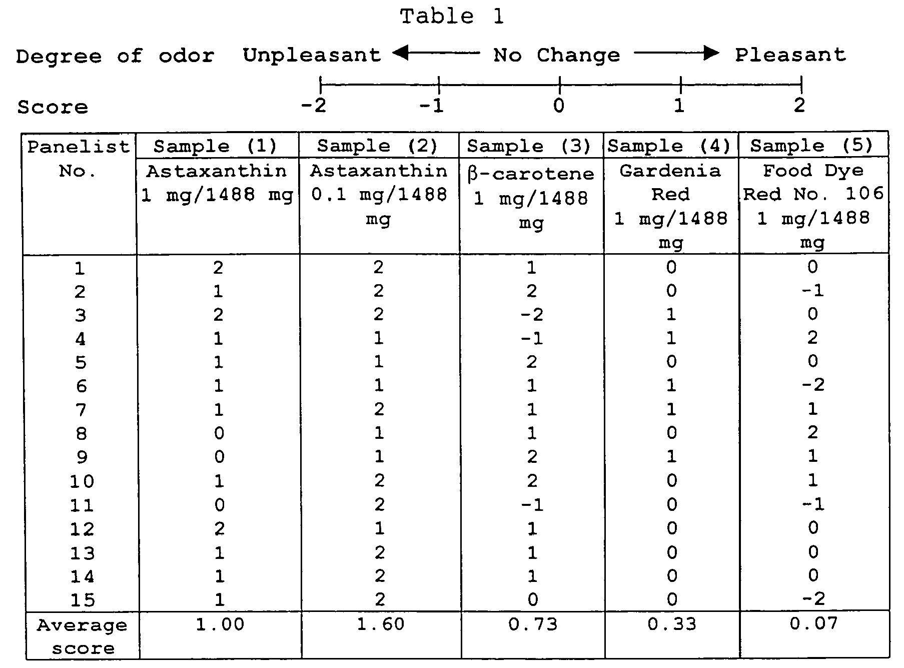

On the basis of these results, the carotenoids of astaxanthin and β-carotene were observed to demonstrate definite deodorizing effects.

Furthermore, as the sensory tests were conducted immediately after adding astaxanthin or other pigment to the control oil, it is clear that the effects observed were not the result of antioxidative effects of astaxanthin based on the possibility of preventing the accompanying odor of oxidation as a result of preventing oxidation of the oils during storage, thereby constituting the discovery of a completely new finding in the form of deodorizing effects.

### Example 2: Production of Softgels Containing Arachidonic Acid-Containing Oil, DHA-Containing Oil and Astaxanthin-Containing Haematococcus Algae Extract

Water was added to 100 parts by weight of gelatin and 30 parts by weight of food additive glycerin followed by dissolving at 50-60°C to prepare a gelatin film. Next, 62.5% by weight of oil (triglyceride) containing 25% arachidonic acid as a constituent fatty acid, 36% by weight of purified fish oil (triglyceride) containing 46% DHA as a constituent fatty acid, and 1.5% by weight of Haematococcus algae extract containing 4.7% astaxanthin were mixed in the presence of flowing nitrogen to prepare the capsule contents. Using the gelatin film and the contents as prepared above, capsule formation and drying were carried out in accordance with ordinary methods to prepare softgels containing 248 mg of contents per capsule.

## Claims

1. A composition for which an oily odor has been deodorized comprising the containing of a carotenoid in an oil.

2. A composition according to claim 1 wherein, the oil is a highly unsaturated fatty acid or compound containing as a constituent fatty acid a highly unsaturated fatty acid.

3. A composition according to claim 1 or claim 2 wherein, the highly unsaturated fatty acid or compound containing as a constituent fatty acid a highly unsaturated fatty acid is an alcohol ester of a highly unsaturated fatty acid, a triglyceride having as a constituent fatty acid a highly unsaturated fatty acid, or a phospholipid having for a constituent fatty acid a highly unsaturated fatty acid.

4. A composition according to any of claims 1 through 3 wherein, the highly unsaturated fatty acid is an omega-6 highly unsaturated fatty acid, omega-3 highly unsaturated fatty acid, omega-9 highly unsaturated fatty acid or combination thereof.

5. A composition according to any of claims 1 through 4 wherein, the omega-6 highly unsaturated fatty acid is 9,12-octadecadienoic acid (linoleic acid) 18:2ω6, 6,9,12-octadecatrienoic acid (γ-linolenic acid) 18:3ω6, 8,11,14-eicosatrienoic acid (dihomo-γ-linolenic acid) 20:3ω6, 5,8,11,14-eicosatetraenoic acid (arachidonic acid) 20:4ω6, 7,10,13,16-docosatetraenoic acid 22:4ω6 or 4,7,10,13,16-docosapentaenoic acid 22:5ω6.

6. A composition according to any of claims 1 through 4 wherein, the omega-3 highly unsaturated fatty acid is 9,12,15-octadecatrienoic acid (α-linolenic acid) 18:3ω3, 6,9,12,15-octadecatetraenoic acid (stearidonic acid) 18:4ω3, 11,14,17-eicosatrienoic acid (dihomo-α-linolenic acid) 20:3ω3, 8,11,14,17-eicosatetraenoic acid 20:4ω3, 5,8,11,14,17-eicosapentaenoic acid 20:5ω3, 7,10,13,16,19-docosapentaenoic acid 22:5ω3 or 4,7,10,13,16,19-docosahexaenoic acid 22:6ω3.

7. A composition according to any of claims 1 through 4 wherein, the omega-9 highly unsaturated fatty acid is 6,9-octadecadienoic acid 18:2ω9, 8,11-eicosadienoic acid 20:2ω9 or 5,8,11-eicosatrienoic acid (Mead acid) 20:3ω9.

8. A composition according to any of claims 1 through 5 wherein, the triglyceride having for a constituent fatty acid an omega-6 highly unsaturated fatty acid is extracted from microbial cells obtained by culturing a microbe belonging to the genus Mortierella.

9. A composition according to any of claims 1 through 4 and 6 wherein, the triglyceride having for a constituent fatty acid an omega-3 highly unsaturated fatty acid is fish oil.

10. A composition according to any of claims 1 through 9 wherein, the carotenoid is β-carotene, α-carotene, β-cryptoxanthin, α-cryptoxanthin, γ-carotene, lycopene, lutein, fucoxanthin, capsanthin, zeaxanthin, phytofluene, phytoene, canthaxanthin or astaxanthin.

11. A composition according to any of claims 1 through 10 wherein, the ratio of carotenoid to highly unsaturated fatty acid that composes oil is 0.00001 to 0.1.

12. A composition according to claim 11 wherein, the ratio of carotenoid to highly unsaturated fatty acid that composes oil is 0.0001 to 0.01.

13. A composition according to claim 12 wherein, the ratio of carotenoid to highly unsaturated fatty acid that composes oil is 0.001 to 0.01.

14. A composition according to any of claims 1 through 13 wherein the composition is a functional food, nutritional supplement food, special health food or geriatric food.

15. A deodorizing method for oily odors containing a carotenoid in an oil.

16. A deodorizing method for oily odors according to claim 15 wherein, the oil is a highly unsaturated fatty acid or compound containing as constituent fatty acid a highly unsaturated fatty acid.

17. A deodorizing method for oily odors according to claim 15 or claim 16 wherein, the highly unsaturated fatty acid or compound containing as constituent fatty acid a highly unsaturated fatty acid is an alcohol ester of a highly unsaturated fatty acid, a triglyceride having for a constituent fatty acid a highly unsaturated fatty acid, or a phospholipid having for a constituent fatty acid a highly unsaturated fatty acid.

18. A deodorizing method for oily odors according to any of claims 15 through 17 wherein, the highly unsaturated fatty acid is an omega-6 highly unsaturated fatty acid, omega-3 highly unsaturated fatty acid, omega-9 highly unsaturated fatty acid or mixture thereof.

19. A deodorizing method for oily odors according to any of claims 15 through 18 wherein, the omega-6 highly unsaturated fatty acid is 9,12-octadecadienoic acid (linoleic acid) 18:2ω6, 6,9,12-octadecatrienoic acid (γ-linolenic acid) 18:3ω6, 8,11,14-eicosatrienoic acid (dihomo-γ-linolenic acid) 20:3ω6, 5,8,11,14-eicosatetraenoic acid (arachidonic acid) 20:4ω6, 7,10,13,16-docosatetraenoic acid 22:4ω6 or 4,7,10,13,16-docosapentaenoic acid 22:5ω6.

20. A deodorizing method for oily odors according to any of claims 15 through 18 wherein, the omega-3 highly unsaturated fatty acid is 9,12,15-octadecatrienoic acid (α-linolenic acid) 18:3ω3, 6,9,12,15-octadecatetraenoic acid (stearidonic acid) 18:4ω3, 11,14,17-eicosatrienoic acid (dihomo-α-linolenic acid) 20:3ω3, 8,11,14,17-eicosatetraenoic acid 20:4ω3, 5,8,11,14,17-eicosapentaenoic acid 20:5ω3, 7,10,13,16,19-docosapentaenoic acid 22:5ω3 or 4,7,10,13,16,19-docosahexaenoic acid 22:6ω3.

21. A deodorizing method for oily odors according to any of claims 15 through 18 wherein, the omega-9 highly unsaturated fatty acid is 6,9-octadecadienoic acid 18:2ω9, 8,11-eicosadienoic acid 20:2ω9 or, 5,8,11-eicosatrienoic acid (Mead acid) 20:3ω9.

22. A deodorizing method for oily odors according to any of claims 15 through 19 wherein, the triglyceride having for a constituent fatty acid an omega-6 highly unsaturated fatty acid is extracted from microbial cells obtained by culturing a microbe belonging to the genus Mortierella.

23. A deodorizing method for oily odors according to any of claims 15 through 18 and 20 wherein, the triglyceride having for a constituent fatty acid an omega-3 highly unsaturated fatty acid is fish oil.

24. A novel deodorizing method for oily odors according to any of claims 15 through 23 wherein, the carotenoid is β-carotene, α-carotene, β-cryptoxanthin, α-cryptoxanthin, γ-carotene, lycopene, lutein, fucoxanthin, capsanthin, zeaxanthin, phytofluene, phytoene, canthaxanthin or astaxanthin.
